# EUROPÄISCHE PATENTSCHRIFT

(11) **EP 3 310 632 B1**
(45) Veröffentlichungstag und Bekanntmachung des Hinweises auf die Patenterteilung: **13.11.2019**
(21) Anmeldenummer: 16723312.1
(22) Anmeldetag: 09.05.2016
(51) Int. Cl.: B60W 30/085, B60W 30/09, B60W 30/08

(54) **STEUERN EINES KRAFTFAHRZEUGS**
CONTROLLING A MOTOR VEHICLE
CONDUITE D'UN VÉHICULE À MOTEUR

(30) Priorität: 17.06.2015 DE 102015211133
(43) Veröffentlichungstag der Anmeldung: 25.04.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/060285
(87) Internationale Veröffentlichungsnummer: WO 2016/202499

(56) Entgegenhaltungen:
- DE-A1-102012 112 802
- DE-A1-102013 201 796
- DE-A1-102014 212 962
- US-A1- 2014 303 827
- US-A1- 2014 350 790

## Beschreibung

Die Erfindung betrifft das Steuern eines Kraftfahrzeugs. Insbesondere betrifft die Erfindung das Steuern eines Kraftfahrzeugs mittels einer hochautomatisierten Funktion in oder nach einer Unfallsituation.

### Stand der Technik

Ein Kraftfahrzeug kann mittels einer hochautomatisierten Funktion (highly automated function, HAF) gesteuert werden. Insbesondere kann das Kraftfahrzeug fahrerunabhängig auf einer Straße geführt werden. Ein Fahrer des Kraftfahrzeugs kann sich dabei einer anderen Tätigkeit als der Überwachung des Kraftfahrzeugs widmen. Derzeit ist das automatisierte Führen eines Kraftfahrzeugs, bei dem der Fahrer als Rückfallebene nicht zur Verfügung steht, unter bestimmten Bedingungen bereits möglich.

Unabhängig von der Qualität eines Steuerverfahrens für das Kraftfahrzeug kann dieses in eine Unfallsituation verwickelt werden. Die Unfallsituation kann beispielsweise durch eine unerwartet die Straße überquerende Person oder ein sich nicht regelkonform verhaltendes anderes Kraftfahrzeug ausgelöst werden. Ein Steuersystem für das Kraftfahrzeug ist mit der Unfallsituation üblicherweise überfordert und wird versuchen, die Kontrolle über das Kraftfahrzeug an den Fahrer zurückzugeben. Hierfür ist jedoch eine vorbestimmte maximale Übergabezeit vorbestimmt, während derer die automatisierte Führung des Kraftfahrzeugs aufrechterhalten werden muss. Auch nach einer Übernahme oder nach einem erfolgten Zusammenstoß des Kraftfahrzeugs mit einem Objekt können Eingriffsversuche des Fahrers in die Führung des Kraftfahrzeugs unreflektiert oder unbewusst sein.

Es ist Aufgabe der vorliegenden Erfindung, eine verbesserte Führung eines Kraftfahrzeugs in einer Unfallsituation bereitzustellen. Die Erfindung löst diese Aufgabe mittels der Gegenstände der unabhängigen Ansprüche. Unteransprüche geben bevorzugte Ausführungsformen wieder.

Die US 2014/0303827 A1 offenbart ein Verfahren zur Erkennung eines unbeabsichtigten Fahrereingriffs.

Die DE 10 2014 212 962 A1 offenbart ein Verfahren zur sicheren Steuerung eines Fahrzeugs nach einem Unfall.

Die DE 10 2012 112 802 A1 offenbart ein Verfahren zum Ausgeben eines Warnsignals an einen Fahrer.

### Offenbarung der Erfindung

Die genannte Aufgabe wird durch ein Verfahren nach dem unabhängigen Anspruch 1, durch ein Computerprogrammprodukt nach dem unabhängigen Anspruch 10 und durch eine Steuervorrichtung nach dem unabhängigen Anspruch 11 gelöst.

Ein Verfahren zum Steuern eines Kraftfahrzeugs umfasst Schritte des fahrerunabhängigen Führens des Kraftfahrzeugs auf einer Straße, des Erfassens einer Unfallsituation des Kraftfahrzeugs, des Erfassens eines Eingriffsversuchs des Fahrers in die Fahrzeugführung, des Bestimmens, dass der Eingriffsversuch kein Führungsversuch ist, und des Aufrechterhaltens der Führung des Kraftfahrzeugs.

Der Eingriffsversuch des Fahrers kann beispielsweise unbeabsichtigt infolge eines Zusammenstoßes des Kraftfahrzeugs mit einem Objekt erfolgen. Der Fahrer kann dadurch derart beschleunigt werden, dass er unbewusst oder unbeabsichtigt in eine Steuerkomponente eingreift, die das Führen oder die Steuerung des Kraftfahrzeugs beeinflusst. Wird ein derartiger Eingriffsversuch bestimmt, so kann die Führung nicht an den Fahrer übergeben, sondern stattdessen durch das Verfahren fortgeführt werden. Ein potentiell schädigender Eingriff des Fahrers in die Führung des Kraftfahrzeugs kann dadurch verhindert werden.

In einer Ausführungsform wird die Führung unter Veränderung eines Führungsziels auf eine möglichst hohe Schutzfunktion aufrechterhalten. Ein anderes Führungsziel, beispielsweise ein komfortables oder rasches Befördern der Insassen des Kraftfahrzeugs, kann dabei außer Kraft gesetzt oder weniger hoch priorisiert werden.

Der Eingriffsversuch kann ein Betätigen einer unmittelbar wirksamen Steuerkomponente des Kraftfahrzeugs und das Aufrechterhalten der Führung das Bewirken einer Gegenkraft auf die Steuerkomponente umfassen.

Üblicherweise kann der Fahrer zu jedem Zeitpunkt die Führung über das Kraftfahrzeug übernehmen, indem er eine Steuerkomponente des Kraftfahrzeugs bedient. Sollte ein Betätigen einer Steuerkomponente jedoch keinen Führungsversuch darstellen und beispielsweise durch ein Umherschleudern des Fahrers im Kraftfahrzeug erfolgen, so kann durch das Bewirken der Gegenkraft der Effekt der Steuerkomponente auf die Führung des Kraftfahrzeugs unterbunden werden. Insbesondere kann so eine Kursänderung ("Verreißen") des Kraftfahrzeugs verhindert werden.

Die Steuerkomponente kann insbesondere einen Antriebsmotor, eine Bremse oder eine Lenkung umfassen. Allgemein kann die Steuerkomponente eine Längs- oder Querbewegung des Kraftfahrzeugs steuern. Andere Steuerkomponenten sind ebenfalls möglich, beispielsweise ein Wählhebel für eine Gangstufe.

In einer Ausführungsform umfasst die Unfallsituation einen Zusammenstoß des Kraftfahrzeugs mit einem Objekt. Dabei kann das Objekt beispielsweise eine Person, ein Kraftfahrzeug oder eine ortsfeste Einrichtung an der Straße umfassen. Es kann jedoch auch ein anderes Objekt an einem Unfall mit dem Kraftfahrzeug beteiligt sein, beispielsweise ein Tier. In einer weiteren Ausführungsform wird die Unfallsituation bestimmt, wenn ein Zusammenstoß des Kraftfahrzeugs mit einem Objekt voraussichtlich erfolgen wird, bevor eine maximale Zeit, die zur Übergabe der Führung des Kraftfahrzeugs an den Fahrer vorbestimmt ist, abgelaufen ist. Überquert beispielsweise ein Fußgänger plötzlich die Straße vor dem Kraftfahrzeug, so dass eine Kollision auch bei Vollbremsung und/oder Ausweichen nicht zu vermeiden ist, so kann bestimmt werden, wann die Kollision voraussichtlich erfolgt. Eine maximale Übergabezeit der Führung an den Fahrer kann fest vorgegeben oder von Parametern abhängig sein. Üblich sind beispielsweise acht bis zehn Sekunden bei einer Autobahnfahrt. Sollte die Kollision früher erfolgen als die maximale Übergabezeit dauert, so kann davon ausgegangen werden, dass der Fahrer keinen sinnvollen Beitrag zur Kollisionsvermeidung, zur Minderung der Kollisionsschäden oder zur Kontrolle des Kraftfahrzeugs nach der Kollision beitragen kann. Die Unfallsituation kann dabei bereits bestimmt werden, bevor der Zusammenstoß mit dem Objekt erfolgt ist.

In einer Ausführungsform wird der Eingriffsversuch auf der Basis einer Beobachtung des Fahrers bewertet. Beispielsweise kann beobachtet werden, dass der Fahrer aus einer Ruheposition heraus durch das Kraftfahrzeug geschleudert wird und infolge dessen auf das Lenkrad einwirkt. Der Eingriff in das Lenkrad kann dabei als kein Führungsversuch bewertet werden.

Ein Aufmerksamkeitsgrad des Fahrers wird vor dem Bestimmen der Unfallsituation bestimmt und ein Eingriffsversuch des Fahrers wird innerhalb einer auf der Basis des Aufmerksamkeitsgrads bestimmten Zeitspanne nicht als Führungsversuch bestimmt. Anders ausgedrückt wird dem Fahrer eine Übernahmezeit zugebilligt, die von seinem Aufmerksamkeitsgrad abhängig ist. Ein Eingriffsversuch des Fahrers während dieser Übernahmezeit wird nicht als Führungsversuch bestimmt.

Es ist bevorzugt, dass in Antwort auf die bestimmte Unfallsituation eine Aufforderung an den Fahrer zur Übernahme der Führung des Kraftfahrzeugs ausgegeben wird. Diese Aufforderung kann insbesondere optisch, akustisch oder haptisch ausgegeben werden.

Außerdem ist bevorzugt, dass in Antwort auf die bestimmte Unfallsituation das Führen des Kraftfahrzeugs in Vorbereitung auf einen Zusammenstoß des Kraftfahrzeugs mit einem Objekt erfolgt. Das Steuerungsziel der Führung des Kraftfahrzeugs kann von einer komfortablen Beförderung des Fahrers und gegebenenfalls weiterer Personen an Bord des Kraftfahrzeugs umgestellt werden auf einen möglichst großen Schutz von Personen und/oder Material innerhalb oder außerhalb des Kraftfahrzeugs. Das Führungsziel kann das Vermeiden eines Zusammenstoßes sowie das Vermeiden eines Sekundärzusammenstoßes umfassen. Weiter kann das Führungsziel ein Abmildern der Konsequenzen einer Kollision umfassen.

Ein Computerprogrammprodukt umfasst Programmcodemittel zur Durchführung des oben beschriebenen Verfahrens, wenn das Computerprogrammprodukt auf einer Verarbeitungseinrichtung abläuft oder auf einem computerlesbaren Datenträger gespeichert ist.

Eine Steuervorrichtung zur Steuerung eines Kraftfahrzeugs ist dazu eingerichtet, das Kraftfahrzeug fahrerunabhängig auf einer Straße zu führen. Dabei umfasst die Steuervorrichtung eine erste Abtasteinrichtung zur Erfassung einer Unfallsituation des Kraftfahrzeugs, eine zweite Abtasteinrichtung zur Erfassung eines Eingriffsversuchs des Fahrers in die Fahrzeugführung und eine Verarbeitungseinrichtung, die dazu eingerichtet ist, zu bestimmen, dass der Eingriffsversuch kein Führungsversuch ist, und die Führung des Kraftfahrzeugs aufrecht zu erhalten. Dabei wird ein Eingriffsversuch des Fahrers innerhalb einer auf der Basis eines vor der Unfallsituation bestimmten Aufmerksamkeitsgrads des Fahrers bestimmten Zeitspanne nicht als Führungsversuch bestimmt.

Im Folgenden wird die Erfindung mit Bezug auf die beigefügten Figuren genauer beschrieben, in denen:
- Fig. 1: ein Kraftfahrzeug mit einer hochautomatisierten Funktion; und
- Fig. 2: ein Ablaufdiagramm eines Verfahrens zum Steuern des Kraftfahrzeugs von Fig. 1
darstellt.

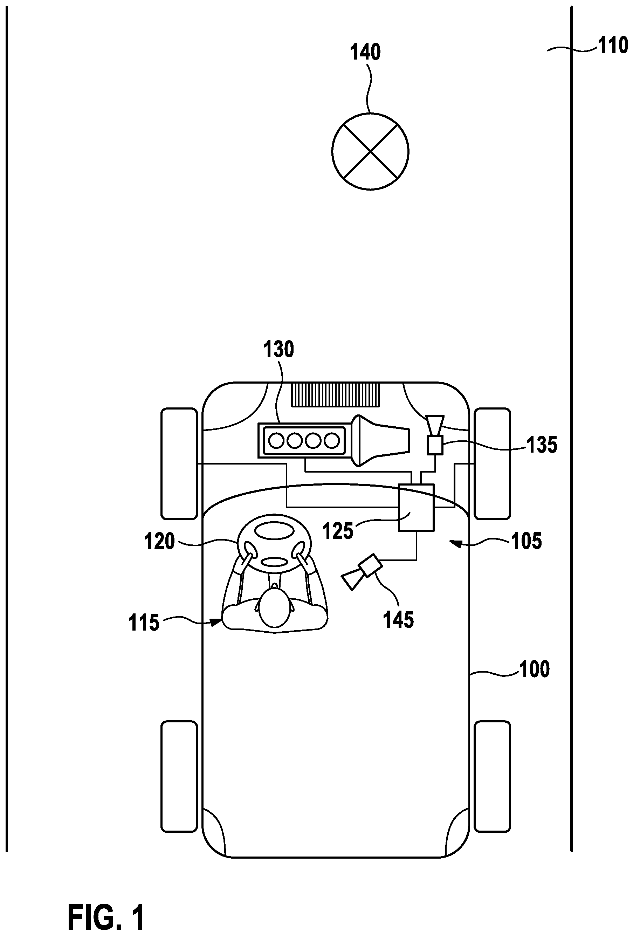

Fig. 1 zeigt ein Kraftfahrzeug 100 mit einer Steuervorrichtung 105. Die Steuervorrichtung 105 ist dazu eingerichtet, dass Kraftfahrzeug 100 auf einer Straße 110 unabhängig von einem Fahrer 115 zu führen. Eine derartige Funktion ist als hochautomatisierte Funktion HAF bekannt. Dabei überwacht der Fahrer 115 die Funktion der Steuervorrichtung 105 nicht mehr und kann sich explizit einer anderen Tätigkeit als dem Führen oder Überwachen der Führung des Kraftfahrzeugs 100 widmen. Die Steuervorrichtung 105 muss dabei auf jede Situation des Kraftfahrzeugs 100 geeignet reagieren können. Sollte die Steuervorrichtung 105 ihre Aufgabe nicht mehr mit ausreichender Sicherheit wahrnehmen können, so ist es vorgesehen, den Fahrer 115 zu einer Übernahme aufzufordern und ihm eine vorbestimmte Übernahmezeit zuzubilligen, um die Führung zu übernehmen. Während dieser Übernahmezeit muss die Steuervorrichtung 105 das Kraftfahrzeug 100 weiterführen können. Die Übernahme erfolgt üblicherweise dadurch, dass der Fahrer 115 eine Steuerkomponente 120 betätigt, die unmittelbar auf die Bewegung des Kraftfahrzeugs 100 wirkt. In der Darstellung von Fig. 1 umfasst die Steuerkomponente 120 in exemplarischer Weise ein Lenkrad, in anderen Ausführungsformen kann die Steuerkomponente 120 jedoch auch ein Fußpedal, einen Bedien- oder Wählhebel, einen Schalter oder eine Taste umfassen. Die Steuerkomponente 120 wirkt in der Regel auf eine Längs- oder Querbewegung des Kraftfahrzeugs 100.

Die Steuervorrichtung 105 umfasst eine Verarbeitungseinrichtung 125, die dazu eingerichtet ist, eine Längs- und Querführung des Kraftfahrzeugs 100 durchzuführen. Dazu ist sie in der Darstellung von Fig. 1 exemplarisch mit lenkbaren Rädern des Kraftfahrzeugs 100 und einem Antriebsmotor 130 verbunden. Ferner kann die Verarbeitungseinrichtung 125 auch mit Bremsen des Kraftfahrzeugs 100 verbunden sein. Üblicherweise ist eine erste Abtasteinrichtung 135 zur Überwachung eines Umfelds des Kraftfahrzeugs 100 vorgesehen. Es können auch mehrere Abtasteinrichtungen 135 vorgesehen sein, und es können unterschiedliche Technologien verwendet werden, wie beispielsweise Radar, Lidar, Ultraschall oder Video.

Die Verarbeitungseinrichtung 125 kann ein Eingreifen des Fahrers 115 in die Führung des Kraftfahrzeugs 100 beispielsweise daran erkennen, dass Steuerkomponenten wie das Lenkrad 120 oder der Antriebsmotor 130 aus einer anderen Quelle als durch die Verarbeitungseinrichtung 125 beeinflusst werden. Während eines üblichen Fahrbetriebs erfolgt daraufhin eine Übergabe der Führung des Kraftfahrzeugs 100 an den Fahrer 115.

Die Verarbeitungseinrichtung 125 ist bevorzugterweise dazu eingerichtet, zu bestimmen, ob sich das Kraftfahrzeug 100 einer Unfallsituation befindet. Die Unfallsituation kann bestimmt werden, wenn eine Kollision mit einem Objekt 140 bereits erfolgt oder voraussichtlich nicht mehr zu vermeiden ist. In einem zeitlichen Bereich unmittelbar vor, während oder nach einer Kollision des Kraftfahrzeugs 100 mit dem Objekt 140 kann eine Übergabe der Kontrolle über das Kraftfahrzeug 100 von der Steuervorrichtung 105 an den Fahrer 115 problematisch sein. Um die Sicherheit des Kraftfahrzeugs 100, des Fahrers 115 oder des Objekts 140 zu erhöhen, kann die Steuervorrichtung 105 während einer Unfallsituation versuchen, einen maximalen Schutz für den Fahrer 115, das Kraftfahrzeug 100 oder das Objekt 140 zu bewirken. Dazu kann das Steuerungsziel eines - üblicherweise möglichst komfortablen und schnellen - Befahrens der Straße 110 verändert werden in ein möglichst effizientes Beschützen des Fahrers 115, des Kraftfahrzeugs 100 oder des Objekts 140.

Außerdem kann die Übergabe der Führung über das Kraftfahrzeug 100 von der Steuervorrichtung 105 an den Fahrer 115 anders als in einem üblichen Betrieb der Steuervorrichtung 105 gehandhabt werden. Um zu verhindern, dass der Fahrer 115 aus Unkenntnis, Erschrockenheit oder unbewusst in die Führung des Kraftfahrzeugs 100 eingreift, ohne damit einen Führungsversuch über das Kraftfahrzeug 100 zu verbinden, wird vorgeschlagen, den Fahrer 115 zu beobachten und die Führung über das Kraftfahrzeug 100 nur dann an ihn abzugeben, wenn er einen überzeugenden Führungsversuch unternimmt. Zum Überwachen des Fahrers 115 kann eine zweite Abtasteinrichtung 145 vorgesehen sein, die Beispielsweise eine auf den Fahrer 115 gerichtete Kamera umfassen kann. Mittels der zweiten Abtasteinrichtung 145 wird vor einer Unfallsituation des Kraftfahrzeugs 100 ein Aufmerksamkeitsgrad des Fahrers 115 bestimmt, wobei der Aufmerksamkeitsgrad einer späteren Bewertung eines Eingriffs des Fahrers 115 in eine Steuerkomponente 120 zugrunde gelegt wird. Ferner kann mittels der zweiten Abtasteinrichtung 145 beispielsweise bestimmt werden, ob ein Lenkeingriff des Fahrers 115 lediglich dadurch erfolgt ist, dass der Fahrer 115 im Kraftfahrzeug 100 umhergeschleudert wird.

Wird bestimmt, dass ein Eingriffsversuch des Fahrers 115 in die Führung des Kraftfahrzeugs 100 keinen Führungsversuch darstellt, so wird vorgeschlagen, dass die Steuervorrichtung 105 fortfährt, das Kraftfahrzeug 100 zu steuern. Dem Eingriffsversuch des Fahrers 115 in die Steuerkomponente 120 kann beispielsweise seitens der Verarbeitungseinrichtung 125 entgegengewirkt werden. Da sowohl der Fahrer 115 als auch die Verarbeitungseinrichtung 125 die Längs- oder Quersteuerung des Kraftfahrzeugs 100 beeinflussen können, kann durch die Verarbeitungseinrichtung 125 eine Beeinflussung bewirkt werden, die der Beeinflussung des Fahrers 115 entgegengerichtet ist, um diese zu kompensieren. In einer anderen Ausführungsform kann der Eingriffsversuch des Fahrers 115 ignoriert werden.

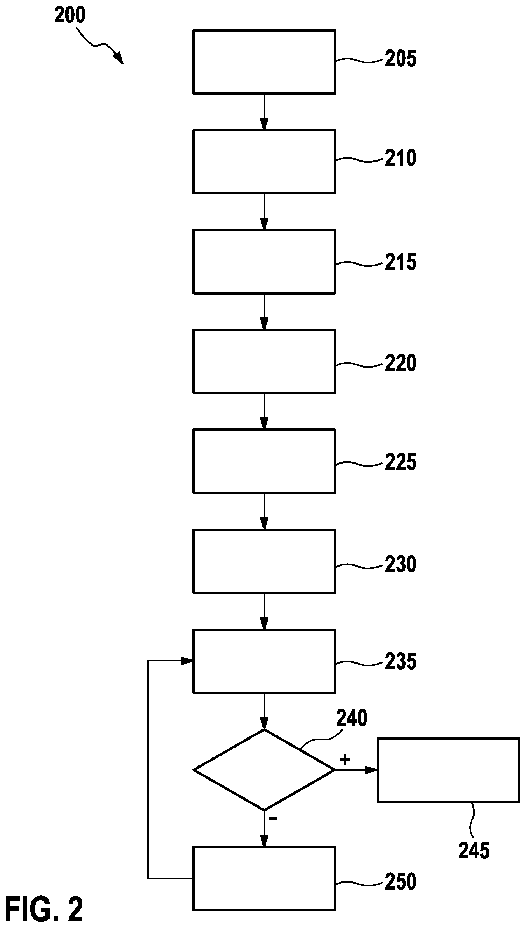

Fig. 2 zeigt ein Ablaufdiagramm eines Verfahrens 200 zur Steuerung des Kraftfahrzeugs 100 von Fig. 1. Das Verfahren 200 ist zum Ablaufen auf der Steuervorrichtung 105 und insbesondere auf der Verarbeitungseinrichtung 125 eingerichtet.

In einem ersten Schritt 205 erfolgt ein fahrerunabhängiges Führen des Kraftfahrzeugs 100, wie oben genauer ausgeführt ist. In einem Schritt 210 wird der Fahrer 115 beobachtet, etwa mittels der zweiten Abtasteinrichtung 145, und es wird ein Aufmerksamkeitsgrad des Fahrers 115 bestimmt.

In einem Schritt 215 wird ein Umfeld des Kraftfahrzeugs 100 abgetastet. Das Abtasten erfolgt üblicherweise bereits im Rahmen von Schritt 205, ist hier jedoch separat aufgeführt, da es die Grundlage für das Erkennen einer Unfallsituation ist, die in einem nachfolgenden Schritt 220 erfolgt. Daraufhin kann in einem optionalen Schritt 225 ein Führungsziel des Schritts 205 abgeändert werden, um die Sicherheit des Kraftfahrzeugs 100, des Fahrers 115 oder des Objekts 140 möglichst zu maximieren. Außerdem wird in Antwort auf das Bestimmen der Unfallsituation bevorzugterweise in einem Schritt 230 eine Aufforderung an den Fahrer 115 ausgegeben, um diesen zur Übernahme der Führung des Kraftfahrzeugs 100 zu bewegen.

In einem Schritt 235 wird ein Eingriffsversuch des Fahrers 115 bestimmt. Der Eingriffsversuch kann insbesondere anhand der Betätigung einer Steuerkomponente zur Beeinflussung der Längs- oder Querbewegung des Kraftfahrzeugs 100 bestimmt werden. In einem nachfolgenden Schritt 240 wird bestimmt, ob es sich beim Eingriffsversuch auch um einen Führungsversuch handelt. Auf der Basis des im Schritt 210 bestimmten Aufmerksamkeitsgrads wird eine Übergangszeit bestimmt, die umso länger ist, je unaufmerksamer der Fahrer 115 zum Bestimmungszeitpunkt war. Während der Übergangszeit wird jeder Eingriff des Fahrers 115 als unbewusst, ungewollt oder unreflektiert bestimmt, so dass kein Führungsversuch vorliegt.

Liegt ein Führungsversuch vor, so wird in einem Schritt 245 die Führung über das Kraftfahrzeug 100 an den Fahrer 115 übergeben. Wird im Schritt 240 jedoch bestimmt, dass kein Führungsversuch vorliegt, so wird die Führung über das Kraftfahrzeug 100 in einem Schritt 250 aufrechterhalten. Anschließend kann das Verfahren 200 zum Schritt 235 zurückkehren und erneut durchlaufen.

## Patentansprüche

1. Verfahren (200) zum Steuern eines Kraftfahrzeugs (100), folgende Schritte umfassend:
- fahrerunabhängiges Führen (205) des Kraftfahrzeugs (100) auf einer Straße;
- Erfassen (220) einer Unfallsituation des Kraftfahrzeugs (100);
- Erfassen (235) eines Eingriffsversuchs der Fahrers (115) in die Fahrzeugführung,
- Bestimmen (240), dass der Eingriffsversuch kein Führungsversuch ist; und
- Aufrechterhalten (250) der Führung des Kraftfahrzeugs (100),
**dadurch gekennzeichnet, dass** ein Aufmerksamkeitsgrad des Fahrers (115) vordem Bestimmen der Unfallsituation bestimmt (210) wird und ein Eingriffsversuch des Fahrers (115) innerhalb einer auf der Basis des Aufmerksamkeitsgrads bestimmten Zeitspanne nicht als Führungsversuch bestimmt (240) wird.

2. Verfahren (200) nach Anspruch 1, wobei die Führung unter Veränderung eines Führungsziels auf eine möglichst hohe Schutzfunktion aufrechterhalten wird.

3. Verfahren (200) nach Anspruch 1 oder 2, wobei der Eingriffsversuch ein Betätigen einer unmittelbar wirksamen Steuerkomponente (120) des Kraftfahrzeugs (100) und das Aufrechterhalten der Führung das Bewirken einer Gegenkraft auf die Steuerkomponente (120) umfasst.

4. Verfahren (200) nach Anspruch 3, wobei die Steuerkomponente (120) einen Antriebsmotor (130), eine Bremse oder eine Lenkung umfasst.

5. Verfahren (200) nach einem der vorangehenden Ansprüche, wobei die Unfallsituation einen Zusammenstoß des Kraftfahrzeugs (100) mit einem Objekt (140) umfasst.

6. Verfahren (200) nach einem der vorangehenden Ansprüche, wobei die Unfallsituation bestimmt wird, wenn ein Zusammenstoß des Kraftfahrzeugs (100) mit einem Objekt (140) voraussichtlich erfolgen wird, bevor eine maximale Zeit, die zur Übergabe der Führung des Kraftfahrzeugs (100) an den Fahrer (115) vorbestimmt ist, abgelaufen ist.

7. Verfahren (200) nach einem der vorangehenden Ansprüche, wobei der Eingriffsversuch auf der Basis einer Beobachtung des Fahrers (115) bewertet wird.

8. Verfahren (200) nach einem der vorangehenden Ansprüche, wobei in Antwort auf die bestimmte Unfallsituation eine Aufforderung an den Fahrer (115) zur Übernahme der Führung des Kraftfahrzeugs (100) ausgegeben (230) wird.

9. Verfahren (200) nach einem der vorangehenden Ansprüche, wobei in Antwort auf die bestimmte Unfallsituation das Führen (205, 250) des Kraftfahrzeugs (100) in Vorbereitung auf einen Zusammenstoß des Kraftfahrzeugs (100) mit einem Objekt (140) erfolgt.

10. Computerprogrammprodukt mit Programmcodemitteln zur Durchführung des Verfahrens (200) nach einem der vorangehenden Ansprüche, wenn das Computerprogrammprodukt auf einer Verarbeitungseinrichtung (125) abläuft.

11. Steuervorrichtung (105) zur Steuerung eines Kraftfahrzeugs (100), wobei die Steuervorrichtung dazu eingerichtet ist, das Kraftfahrzeug (100) fahrerunabhängig auf einer Straße (110) zu führen und folgendes umfasst:
- eine erste Abtasteinrichtung (135) zur Erfassung einer Unfallsituation des Kraftfahrzeugs (100);
- eine zweite Abtasteinrichtung (120, 130, 145) zur Erfassung eines Eingriffsversuchs der Fahrers (115) in die Fahrzeugführung; und
- eine Verarbeitungseinrichtung (125), die dazu eingerichtet ist, zu bestimmen, dass der Eingriffsversuch kein Führungsversuch ist und die Führung des Kraftfahrzeugs (100) aufrecht zu erhalten, **dadurch gekennzeichnet, dass** ein Eingriffsversuch des Fahrers (115) innerhalb einer auf der Basis eines vor der Unfallsituation bestimmten Aufmerksamkeitsgrads des Fahrers bestimmten Zeitspanne nicht als Führungsversuch bestimmt (240) wird.

## Claims

1. Method (200) for controlling a motor vehicle (100), comprising the following steps:
- guiding (205) the motor vehicle (100) on a road independently of a driver;
- detecting (220) an accident situation of the motor vehicle (100);
- detecting (235) an attempt by the driver (115) to intervene in the vehicle guidance;
- determining (240) that the intervention attempt is not a guidance attempt; and
- maintaining (250) the guidance of the motor vehicle (100), **characterized in that** an attention level of the driver (115) before the determination of the accident situation is determined (210) and an intervention attempt by the driver (115) within a time interval determined on the basis of the attention level is determined (240) as not being a guidance attempt.

2. Method (200) according to Claim 1, wherein the guidance is maintained while changing a guidance target for a highest possible protection function.

3. Method (200) according to Claim 1 or 2, wherein the intervention attempt comprises actuating an immediately effective control component (120) of the motor vehicle (100) and maintaining the guidance comprises effecting a counterforce on the control component (120).

4. Method (200) according to Claim 3, wherein the control component (120) comprises a drive motor (130), a brake or a steering system.

5. Method (200) according to one of the preceding claims, wherein the accident situation comprises a collision of the motor vehicle (100) with an object (140).

6. Method (200) according to one of the preceding claims, wherein the accident situation is determined when a collision of the motor vehicle (100) with an object (140) is expected to take place before a maximum time that is predetermined in order to transfer the guidance of the motor vehicle (100) to the driver (115) has elapsed.

7. Method (200) according to one of the preceding claims, wherein the intervention attempt is evaluated on the basis of an observation of the driver (115).

8. Method (200) according to one of the preceding claims, wherein, in response to the determined accident situation, a request is output (230) to the driver (115) to take over the guidance of the motor vehicle (100).

9. Method (200) according to one of the preceding claims, wherein, in response to the determined accident situation, the motor vehicle (100) is guided (205, 250) in preparation for a collision of the motor vehicle (100) with an object (140).

10. Computer program product containing program code means for performing the method (200) according to one of the preceding claims when the computer program product runs on a processing apparatus (125).

11. Control device (105) for controlling a motor vehicle (100), wherein the control device is configured so as to guide the motor vehicle (100) on a road (110) independently of a driver and comprises the following:
- a first sampling apparatus (135) for detecting an accident situation of the motor vehicle (100);
- a second sampling apparatus (120, 130, 145) for detecting an attempt by the driver (115) to intervene in the vehicle guidance; and
- a processing apparatus (125) that is configured so as to determine that the intervention attempt is not a guidance attempt and to maintain the guidance of the motor vehicle (100), **characterized in that** an intervention attempt by the driver (115) within a time interval determined on the basis of an attention level of the driver determined before the accident situation is determined (240) as not being a guidance attempt.

## Revendications

1. Procédé (200) de commande d'un véhicule automobile (100), comprenant les étapes suivantes :
- conduite (205) indépendante du conducteur du véhicule automobile (100) sur une route ;
- détection (220) d'une situation d'accident du véhicule automobile (100) ;
- détection (235) d'une tentative d'intervention du conducteur (115) dans la conduite du véhicule ;
- détermination (240) que la tentative d'intervention n'est pas une tentative de conduite ; et
- maintien (250) de la conduite du véhicule automobile (100),
**caractérisé en ce qu'**un degré d'attention du conducteur (115) est déterminé avant la détermination de la situation d'accident (210) et une tentative d'intervention du conducteur (115) à l'intérieur d'un intervalle de temps déterminé sur la base du degré d'attention n'est pas déterminé comme une tentative de conduite (240).

2. Procédé (200) selon la revendication 1, la conduite étant maintenue à une fonction de protection aussi élevée que possible en modifiant une cible de conduite.

3. Procédé (200) selon la revendication 1 ou 2, la tentative d'intervention comprenant un actionnement d'un composant de commande (120) à action immédiate du véhicule automobile (100) et le maintien de la conduite comprenant la production d'une force contraire sur le composant de commande (120).

4. Procédé (200) selon la revendication 3, le composant de commande (120) comprenant un moteur de propulsion (130), un frein ou un système de direction.

5. Procédé (200) selon l'une des revendications précédentes, la situation d'accident comprenant une collision du véhicule automobile (100) avec un objet (140) .

6. Procédé (200) selon l'une des revendications précédentes, la situation d'accident étant déterminée lorsqu'une collision du véhicule automobile (100) avec un objet (140) va probablement se produire avant qu'une durée maximale, qui est prédéfinie pour le transfert de la conduite du véhicule automobile (100) au conducteur (115), se soit écoulée.

7. Procédé (200) selon l'une des revendications précédentes, la tentative d'intervention étant évaluée sur la base d'une observation du conducteur (115).

8. Procédé (200) selon l'une des revendications précédentes, une demande de prise en charge de la conduite du véhicule automobile (100) étant délivrée (230) au conducteur (115) en réponse à la situation d'accident déterminée.

9. Procédé (200) selon l'une des revendications précédentes, la conduite (205, 250) du véhicule automobile (100), en réponse à la situation d'accident déterminée, s'effectuant en préparation à une collision du véhicule automobile (100) avec un objet (140).

10. Produit de programme informatique comprenant des moyens de code de programme destinés à mettre en œuvre le procédé (200) selon l'une des revendications précédentes lorsque le produit de programme informatique est exécuté sur un dispositif de traitement (125).

11. Dispositif de commande (105) destiné à commander un véhicule automobile (100), le dispositif de commande étant conçu pour conduire le véhicule automobile (100) sur une route (110) indépendamment du conducteur et comprenant les éléments suivants :
- un premier dispositif de balayage (135) destiné à détecter une situation d'accident du véhicule automobile (100) ;
- un deuxième dispositif de balayage (120, 130, 145) destiné à détecter une tentative d'intervention du conducteur (115) dans la conduite du véhicule ; et
- un dispositif de traitement (125), qui est conçu pour déterminer que la tentative d'intervention n'est pas une tentative de conduite et maintenir la conduite du véhicule automobile (100),
**caractérisé en ce qu'**une tentative d'intervention du conducteur (115) à l'intérieur d'un intervalle de temps, déterminé sur la base d'un degré d'attention du conducteur déterminé avant la situation d'accident, n'est pas déterminé comme une tentative de conduite (240).
